# EUROPEAN PATENT SPECIFICATION

(11) **EP 3 026 679 B1**
(45) Date of publication and mention of the grant of the patent: **28.06.2017**
(21) Application number: 14306926.8
(22) Date of filing: 28.11.2014
(51) Int. Cl.: H01B 7/295, C08K 3/00, H01B 3/44, C08K 3/22, C08K 3/38

(54) **FLAME RETARDANT PVC MATERIAL**
FLAMMHEMMENDES PVC-MATERIAL
MATÉRIAU EN PVC IGNIFUGE

(43) Date of publication of application: 01.06.2016
(73) Proprietor: Nexans, 75008 Paris (FR)
(72) Inventor: Lipp, Anette, 90427 Nürnberg (DE); Brix, Susanne, 90542 Eckental (DE)
(74) Representative: Peguet, Wilfried

(56) References cited:
- WO-A1-2013/085788
- US-A1- 2010 292 379
- US-A1- 2012 003 473
- US-A1- 2014 141 244
- Kelvin K. Shen: "Boron-Based Flame Retardants in Non-Halogen-Based Polymers" In: "Non-Halogenated Flame Retardant Handbook", 18 April 2014 (2014-04-18), John Wiley & Sons, Inc., Hoboken, NJ, USA, XP055153723, ISBN: 978-1-11-868624-9 pages 201-241, DOI: 10.1002/9781118939239.ch6, * table 1 *
- SERGEI V. LEVCHIK ET AL: "Overview of the recent literature on flame retardancy and smoke suppression in PVC", POLYMERS FOR ADVANCED TECHNOLOGIES, vol. 16, no. 10, 1 January 2005 (2005-01-01), pages 707-716, XP055124745, ISSN: 1042-7147, DOI: 10.1002/pat.645
- BASFAR ET AL: "Effect of various combinations of flame-retardant fillers on flammability of radiation cross-linked poly(vinyl chloride) (PVC)", POLYMER DEGRADATION AND STABILITY, BARKING, GB, vol. 82, no. 2, 1 January 2003 (2003-01-01), pages 333-340, XP027140231, ISSN: 0141-3910 [retrieved on 2003-01-01]

## Description

The present invention relates to a flame retardant polymeric material used in a cable.

More particularly, the flame retardant material is used in electric and/or optical cables as a layer surrounding one or several conductors.

The document US 2011/0198108 describes a flame-retardant cable jacket with low flammability containing PVC resin, a plasticizer and metal oxide particles such silicone dioxide particles.

However, the flame retardant properties of said jacket are not optimized.

US 2014/0141244 recites riser and plenum cables having a conducting element surrounded by flame-retardant polymeric material (including PVC). The flame-retardant polymeric material comprises a metallic borate (zinc borate) and a metallic hydroxide (ATH). The present invention seeks to solve the above-mentioned problems of the prior art, in providing a new cable having improved flame retardant properties, while guaranteeing good mechanical properties.

To this end, an object of the present invention is to provide a cable comprising at least one elongated conducting element surrounded by a flame retardant material obtained from a polymeric composition comprising a polymer material comprising polyvinyl chloride (PVC), characterized in that the polymeric composition further comprises:
- from 5.0 parts by weight of metallic alkaline earth borate over 100 parts by weight of polymer material, and
- more than 30.0 parts by weight of metallic hydroxide over 100 parts by weight of polymer material.

The synergy brought by the association of the metallic alkaline earth borate with the metallic hydroxide with specific amounts in a PVC material allows advantageously to provide a flame retardant material with high flame retardant properties, improving the thermal stability as well as the limited oxygen index, while presenting good mechanical properties such as tensile strength and elongation at break.

The flame retardant material according to the invention allows surprisingly to present flame retardant properties with at least one or both of the two following characteristics:
- a thermal stability of at least 40 minutes, and more preferably of at least 46 minutes, according to IEC 60811-405;
- a limited oxygen index (% O₂) of at least 27 %, and more preferably of at least 28 %, according to EN ISO 4589-2.

In addition to said high flame retardant properties, the flame retardant material according to the invention allows surprisingly to guarantee good mechanical properties. More particularly, it can present at least one or both of the two following characteristics:
- a tensile strength of at least 12.5 MPa, and more preferably of at least 15.0 MPa, and even more preferably 16.0 MPa, according to IEC 6081 1-501;
- an elongation at break of at least 220 %, and more preferably of at least 275 %, according to IEC 60811-501.

### The metallic alkaline earth borate

The metallic alkaline earth borate can be advantageously calcium borate (Ca₃(BO₃)₂).

The amount of metallic alkaline earth borate in the polymeric composition can be adjusted to obtain the desired properties.

The polymeric composition can comprise up to 30.0 parts by weight of metallic alkaline earth borate over 100 parts by weight of polymer material, and more preferably up to 20.0 parts of metallic alkaline earth borate over 100 parts by weight of polymer material.

This upper limit allows advantageously to optimize flame retardant properties, and more particularly to present a thermal stability of at least 49 minutes, according to IEC 60811-405.

### The metallic hydroxide

The metallic hydroxide can be hydrated fillers, and can be selected among aluminum trihydroxide (ATH), magnesium dihydroxide (MDH), and any mixture thereof.

The amount of metallic hydroxide in the polymeric composition can be adjusted to obtain the desired properties.

The polymeric composition can comprise up to 120 parts by weight of metallic hydroxide over 100 parts by weight of polymer material, and more preferably from 40 to 100 parts by weight of metallic hydroxide over 100 parts by weight of polymer material.

### The polymer material

The polymer material of the invention includes at least polyvinyl chloride (PVC), and can further include one or several other polymers.

The PVC can have a K-value from 60 to 80 or more. Usually K-value is an indicator of molecular weight and is determined according to ISO 1628-2 standard.

For example, K-value of 57 (K-57) is related to medium molecular weight for injection molding; K-value of 67 (K-67) is related to medium-high molecular weight for rigid extrusion; K-value of 70 (K-70) and K-value of 75 (K-75) are related to higher molecular weight, more particularly for plasticized extrusion or calendering.

More preferably, the PVC used in the present invention has a K-value of at least 65 (K-65), and more preferably of at least 70 (K-70).

The other polymers can be well-known polymers in the art, selected for example among olefinic polymers.

In the present invention, one hears by the term "polymer" all types of polymers well-known in the art, such as homopolymer, copolymer, copolymer block, terpolym er, etc.

The other polymers can be selected among polymers of ethylene, polymers of propylene, polymers of urethane, polymers of ester, rubbers such as vinyl acetate or nitrile based polymers, and any mixture thereof.

The polymer material comprises more than 50 parts by weight of PVC over 100 parts by weight of polymer material, more preferably more than 70 parts by weight of PVC over 100 parts by weight of polymer material, and even more preferably more than 90 parts by weight of PVC over 100 parts by weight of polymer material.

In a particularly preferred embodiment, the polymeric composition of the invention only comprises PVC as polymer material.

The polymeric composition of the invention can include from about 30% to about 50% by weight of PVC, over the total weight of the polymeric composition.

### Other fillers and/or additives

The polymeric composition can further comprise at least one inert filler, and more preferably at least one inert mineral filler, such as for example carbonates (e.g. chalk, dolomite), silicates (talc, kaolin), etc.

The amount of inert filler in the polymer composition can be from 2 to 60 parts by weight over 100 parts by weight of polymer material, and more preferable to 5 to 40 parts by weight over 100 parts by weight of polymer material.

The polymeric composition can also include electrically conductive filler, such as carbon black, in an amount to improve dielectric resistance without impairing the electrically insulating properties of the flame retardant material, or in an amount to provide semi-conductive property to the flame retardant material.

The polymeric composition can also include zinc borate or any derivative thereof. The zinc borate or any derivative thereof can be selected among 2ZnO 3B₂O₃ 3.5H₂O; 2ZnO 3B₂O₃; 4ZnO B₂O₃ H₂O; 4ZnO 6B₂O₃ 7H₂O; and 2ZnO 2B₂O₃ 3H₂O.

In a preferred embodiment, the polymer composition is substantially free of zinc borate or any derivative thereof. More particularly, the polymer composition can comprise less than 5.0 parts by weight of zinc borate or any derivative thereof over 100 parts by weight of polymer material, and more preferably less than 2.0 part by weight of zinc borate or any derivative thereof over 100 parts by weight of polymer material, and even more preferably 0 part by weight of zinc borate or any derivative thereof over 100 parts by weight of polymer material. Indeed the presence of any zinc borate or any derivative, especially in an amount of at least 5.0 parts by weight over 100 parts by weight of polymer material, aims at degrading the flame retardant properties, such as thermal stability and/or limited oxygen index, of the flame retardant material of the present invention.

In another particular embodiment, the polymer composition is substantially free of metalloid oxide. More particularly, the polymer composition can comprise less than 1.0% by weight of metalloid oxide, and more preferably less than 0.5% by weight of metalloid oxide, and even more preferably 0% by weight of metalloid oxide. The metalloid oxide can be trioxide antimony or silicon dioxide.

The polymeric composition of the invention may further comprise well-known organic and/or inorganic additive(s), which can be selected for example among stabilizers such as antioxidants, plasticizers, agents for protection against aging such as UV protector, coupling agents, crosslinking agents such as organic peroxide and/or silane based agents, cross-linking catalysts, dyes, pigments, processing aids, compatibilizers, lubricants, softeners, extenders, tackifiers, peptisers, activators, accelerators, and any mixture thereof.

More preferably, the polymeric composition can include at least one of the additives selected among plasticizers, stabilizers, and any mixture thereof.

The polymeric composition can include from 20 to 100 parts by weight of plasticizer over 100 parts by weight of polymeric material, and more preferably from 40 to 80 parts by weight of plasticizer over 100 parts by weight of polymeric material.

Plasticizers are well-known in the art and are added to the composition to improve its flexibility and processing properties. The plasticizer is more preferably a halogen-free plasticizer.

Plasticizers appropriate for the present invention include, but are not limited to, diisodecyl phthalate, di(2-propyl heptyl)phthalate, n-octyl-n-decyl phthalates (mixed), diallyl phthalate, dioctyl sebacate, n-octyl-n-decyl trimellitate, triisooctyl trimellitate, isodecyl diphenyl phosphate, di-2-ethylhexyl adipate, di-2-ethylhexyl azelate, di-2-ethylhexyl sebacate, butyl benzyl sebacate, diisodecyl adipate, pentaerytritol ester, and acrylic acid-ethylene-vinyl acetate terpolymer.

More preferably, the plasticizer used in the polymeric composition is a in a liquid state, in order to optimize the processability of the polymeric composition.

The polymeric composition can include from 1 to 20 parts by weight of stabilizer over 100 parts by weight of polymeric material, and more preferably from 2 to 10 parts by weight of stabilizer over 100 parts by weight of polymeric material.

Stabilizers are more preferably Calcium and Zinc systems or complexes, which are well-known in the art in the domain of PVC.

### The flame retardant material

The flame retardant material according to the invention can be a thermoplastic material or a cross-linked material, depending on the required application. More preferably, the flame retardant material is a non-crosslinked material, and more particularly a non-crosslinked PVC material.

The flame retardant material can advantageously be silicone-free.

The flame retardant material can be preferably an extruded material. It can be selected among an insulating layer, a protecting sheath, and a combination thereof.

The flame retardant material according to the invention can be a layer physically in direct contact with the conductor, an intermediate layer, or the outermost layer of the cable.

Depending of the electrical properties wanted around the conductor of the cable, the polymer material can be an electrically conductive material or a semi-conductive material or an electrically insulating material.

### The cable

In the present description, the term "cable" indicates an electric cable and/or an optic cable, including at least one elongated electric and/or optic element as conducting element.

The flame retardant material can surround one or several elongated conducting element, said elongated conducting element (s) being insulated or not.

In a particular embodiment, the elongated conducting element(s) can be in a central position in the cable.

The elongated conducting element can be a single core conductor such as an electrical wire, or a multicore conductor such as a plurality of wires.

When the elongated conducting element is an elongated electric element, the latter can be made from a metallic material such as one selected among aluminum, aluminum alloy, copper, copper alloy, and any combination thereof.

Another object of the invention is a process for manufacturing a cable according to the invention, characterized in that it comprises the following steps:
i. forming a blend (i.e. the polymeric composition) comprising the polymer material, the metallic hydroxide, and the metallic alkaline earth borate, and optionally the stabilizer and/or the plasticizer, and
ii. melt-processing the blend of step i.

The step i can be subdivided in two steps i1 and i2 when the polymeric composition includes the stabilizer and the plasticizer. In this respect, the step i can include the following steps:
i1. forming a dry blend comprising the polymer material, the metallic hydroxide, the metallic alkaline earth borate, and the stabilizer,
i2. adding the plasticizer in a liquid state, into the dry blend of step i1.

The step i, and more particularly step i1 and i2 has performed in using a hot mixer, at room temperature (around 25°C).

During the blending, the temperature profile can achieve 130°C because of the mechanical frictions within the dry blend. In order to guaranty that the blend stays in a "dry" state during the step i, it is preferable that the temperature within the blend is less than the melting range of the polymer material, and more particularly less than the melting range of the PVC. More particularly, the temperature within the blend can be advantageously up to 130°C.

The classical temperature of step ii is a temperature able to render the polymer material malleable, or in other terms the step ii is performed at a temperature around the melting temperature of the polymer material.

The step ii is more particularly a step of extruding the blend of step i around an elongated conducting element, in using preferably an extruder.

The present invention will become more fully understood from the examples given herein below and from the accompanying drawing, which are given by way of illustration only, and thus, which are not limits of the present invention, and wherein:

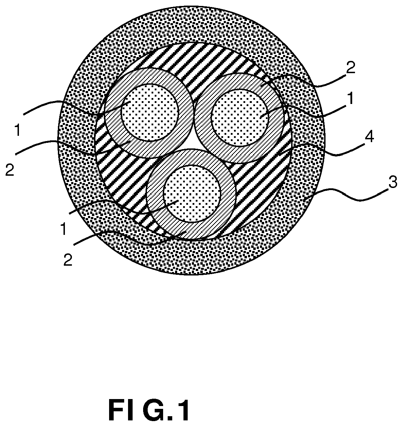

Figure 1 represents a particular embodiment of the cross section of an example of an electric cable according to the invention.

The electric cable as represented on figure 1 comprises three insulated electrical conductors including respectively one copper central core 1 of 1.5 mm², surrounded by an insulated layer 2 of crosslinked polyethylene.

These three insulated electrical conductors are surrounded by a protecting jacket 3, which is the flame retardant material according to the present invention.

In addition, a polymer bedding 4 fills the voids between the three insulated conductors and the protecting jacket 3.

The insulated layers 2, the protecting jacket 3 as well as the bedding 4 are extruded materials by well-known technics in the art.

Different compositions according to comparative compositions (see Table 1) and according to the present invention (see Table 2) have been prepared.

The amounts in Table 1 and in Table 2 are expressed in parts by weight over 100 parts by weight of polymer material. In Tables 1 and 2, the polymer material is only constituted by PVC.

**Table 1**

| Polymeric composition | C1 | C2 | C3 | C4 | C5 | C6 |
|---|---|---|---|---|---|---|
| PVC | 100 | 100 | 100 | 100 | 100 | 100 |
| Antimony trioxide | 8 | 0 | 0 | 0 | 0 | 0 |
| ATH | 0 | 45 | 45 | 30 | 30 | 45 |
| Zinc borate | 0 | 5 | 10 | 0 | 0 | 0 |
| Calcium borate | 0 | 0 | 0 | 15 | 10 | 2 |
| Inert filler | 67 | 25 | 20 | 30 | 35 | 28 |
| Plasticizer | 60 | 60 | 60 | 60 | 60 | 60 |
| Stabilizer | 2 | 2 | 2 | 2 | 2 | 2 |
| Total parts | 237 | 237 | 237 | 237 | 237 | 237 |

**Table 2**

| Polymeric composition | 11 | 12 | 13 | 14 | 15 | 16 |
|---|---|---|---|---|---|---|
| PVC | 100 | 100 | 100 | 100 | 100 | 100 |
| Antimony trioxide | 0 | 0 | 0 | 0 | 0 | 0 |
| ATH | 45 | 45 | 45 | 45 | 45 | 45 |
| Zinc borate | 0 | 0 | 0 | 0 | 0 | 0 |
| Calcium borate | 15 | 10 | 5 | 20 | 25 | 30 |
| I nert filler | 15 | 20 | 25 | 10 | 5 | 0 |
| Plasticizer | 60 | 60 | 60 | 60 | 60 | 60 |
| Stabilizer | 2 | 2 | 2 | 2 | 2 | 2 |
| Total parts | 237 | 237 | 237 | 237 | 237 | 237 |

The compounds listed in tables 1 and 2 are as follows:
- PVC is a high molecular weight polyvinyl chloride with a K-value of 70, and commercialized by Ineos, under the reference Norvinyl S7050;
- Antimony trioxide is the compound Sb₂O₃ commercialized by SICA (Société Industrielle et Chimique de l'Aisne), under the reference Sicabatch 401005;
- ATH is aluminum trihydroxide commercialized by Martinswerk, under the reference Martinal OL-104 LEO;
- Zinc borate is the compound 2ZnO 3B₂O₃ 3,5H₂O, commercialized by Societa Chimica Larderello, under the reference Zinborel fine;
- Calcium borate is the compound Ca₃(BO₃)₂, commercialized by Sibelco, under the reference Portaflame CA13;
- Inert filler is chalk, commercialized by SH Minerals, under the reference Calcit MX 20;
- Plasticizer is a diisodecyl phthalate (DIDP) plasticizer, commercialized by Exxon Mobil, under the reference Jayflex DIDP; and
- Stabilizer is a one-pack system with calcium-zinc complex, commercialized by Baerlocher, under the reference standard grade Baeropan R 8703.

The polymeric compositions in Table 1 and 2 are prepared as follows:
i1. forming a dry blend, at room temperature (25°C), in mixing all the components listed in the above mentioned tables, except the plasticizer,
i2. adding the plasticizer in a liquid state, into the dry blend of step i1, in order to impregnate the dry blend, under mixing, and
ii. melt-processing the blend of step i2 at 170°C in a two-roll mill to form sheets of 0.5 mm of thickness.

The following properties are determined on said flame retardant material sheets:
- the tensile strength, in Mpa, according to according to IEC 60811-501;
- the elongation at break, in %, according to IEC 60811-501;
- the thermal stability, in minutes, according to IEC 60811-405; and
- the limited oxygen index, in % O₂, according to EN ISO 4589-2.

The results are gathered in the Tables 3 and 4 as below:

**Table 3**

| Polymeric composition | C1 | C2 | C3 | C4 | C5 | C6 |
|---|---|---|---|---|---|---|
| Tensile strength (MPa) | 15.3 | 15.6 | 15.3 | 15.6 | 15.7 | 16.0 |
| Elongation at break (%) | 274 | 271 | 267 | 279 | 279 | 284 |
| Thermal stability (min) | 62 | < 40 | < 32 | 50 | 52 | 60 |
| Limited oxygen index (% O₂) | 29 | 27 | 27 | 26 | 26 | 26 |

**Table 4**

| Polymeric composition | I1 | I2 | I3 | I4 | I5 | I6 |
|---|---|---|---|---|---|---|
| Tensile strength (MPa) | 16.0 | 18.9 | 16.0 | 16.3 | 16.2 | 16.4 |
| Elongation at break (%) | 277 | 281 | 278 | 290 | 289 | 288 |
| Thermal stability (min) | 54 | 56 | 59 | 52 | 48 | 46 |
| Limited oxygen index (% O₂) | 28 | 28 | 28 | 29 | 28 | 29 |

In view of said results, it is clear that all the compositions according to the invention, gathered in Table 2, provide very good flame retardant properties as well as very good mechanical properties, which is not the case for the compositions gathered in Table 1.

Indeed, all the flame retardant materials obtained from the polymeric compositions of Table 2 present:
- a thermal stability of at least 46 minutes; and
- a limited oxygen index (% O₂) of at least 28 %;
- a tensile strength of at least 16.0 MPa; and
- an elongation at break of at least 277 %.

More particularly, the flame retardant material 11, 12, 13 and 14 present a higher thermal stability (thermal stability between 52 and 59) than 15 and 16 (thermal stability between 46 and 48), since they include not more than 20.0 parts by weight of calcium borate over 100 parts by weight of polymer material in the polymeric composition.

## Claims

1. Cable comprising at least one elongated conducting element (1) surrounded by a flame retardant material (2, 3, 4) obtained from a polymeric composition comprising a polymer material comprising polyvinyl chloride (PVC), **characterized in that** the polymeric composition further comprises:
- from 5.0 parts by weight of metallic alkaline earth borate over 100 parts by weight of polymer material, and
- more than 30.0 parts by weight of metallic hydroxide over 100 parts by weight of polymer material.

2. Cable according to claim 1, **characterized in that** the flame retardant material has a thermal stability of at least 40 minutes, according to IEC 60811-405.

3. Cable according to claim 1 or 2, **characterized in that** the flame retardant material has a limited oxygen index (% O₂) of at least 27 %, according to EN ISO 4589-2.

4. Cable according to any one of the preceding claims, **characterized in that** the flame retardant material has a tensile strength of at least 12.5 MPa, according to IEC 60811-501.

5. Cable according to any one of the preceding claims, **characterized in that** the flame retardant material has an elongation at break of at least 220 %, according to IEC 60811-501.

6. Cable according to any one of the preceding claims, **characterized in that** the metallic alkaline earth borate is calcium borate (Ca₃(BO₃)₂).

7. Cable according to any one of the preceding claims, **characterized in that** the polymeric composition comprises up to 30.0 parts by weight of metallic alkaline earth borate over 100 parts by weight of polymer material, and more preferably up to 20.0 parts of metallic alkaline earth borate over 100 parts by weight of polymer material.

8. Cable according to any one of the preceding claims, **characterized in that** the metallic hydroxide is selected among aluminum trihydroxide (ATH), magnesium dihydroxide (MDH), and any mixture thereof.

9. Cable according to any one of the preceding claims, **characterized in that** the polymeric composition comprises up to 120 parts by weight of metallic hydroxide over 100 parts by weight of polymer material, and more preferably from 40 to 100 parts by weight of metallic hydroxide over 100 parts by weight of polymer material.

10. Cable according to any one of the preceding claims, **characterized in that** the polymeric composition is substantially free of zinc borate or any derivative thereof.

11. Cable according to any one of the preceding claims, **characterized in that** the polymeric composition further comprises one plasticizer.

12. Cable according to any one of the preceding claims, **characterized in that** the polymeric composition further comprises one stabilizer.

13. Cable according to any one of the preceding claims, **characterized in that** the polymeric composition further comprises one inert filler.

14. Cable according to any one of the preceding claims, **characterized in that** the flame retardant material is selected among an insulating layer (2), a protecting sheath (3), a bedding (4), and a combination thereof.

15. Cable according to any one of the preceding claims, **characterized in that** the flame retardant material is the outermost layer (3) of the cable.

## Patentansprüche

1. Kabel, umfassend zumindest ein längliches leitendes Element (1), das von einem flammhemmenden Material (2, 3, 4) umgeben ist, das aus einer polymeren Zusammensetzung erhalten wird, die ein Polymermaterial umfasst, das Polyvinylchlorid (PVC) umfasst, **dadurch gekennzeichnet, dass** die polymere Zusammensetzung ferner umfasst:
- ab 5,0 Gewichtsteile metallisches Erdalkaliborat auf 100 Gewichtsteile Polymermaterial, und
- mehr als 30,0 Gewichtsteile metallisches Hydroxid auf 100 Gewichtsteile Polymermaterial.

2. Kabel nach Anspruch 1, **dadurch gekennzeichnet, dass** das flammhemmende Material eine Wärmestabilität gemäß IEC 60811-405 von zumindest 40 Minuten aufweist.

3. Kabel nach Anspruch 1 oder 2, **dadurch gekennzeichnet, dass** das flammhemmende Material einen Sauerstoffindex (% O₂) gemäß EN ISO 4589-2 von zumindest 27 % aufweist.

4. Kabel nach einem der vorstehenden Ansprüche, **dadurch gekennzeichnet, dass** das flammhemmende Material eine Zugfestigkeit gemäß IEC 60811-501 von zumindest 12,5 MPa aufweist.

5. Kabel nach einem der vorstehenden Ansprüche, **dadurch gekennzeichnet, dass** das flammhemmende Material eine Bruchdehnung gemäß IEC 60811-501 von zumindest 220 % aufweist.

6. Kabel nach einem der vorstehenden Ansprüche, **dadurch gekennzeichnet, dass** das metallische Erdalkaliborat Calciumborat (Ca₃(BO₃)₂) ist.

7. Kabel nach einem der vorstehenden Ansprüche, **dadurch gekennzeichnet, dass** die polymere Zusammensetzung bis zu 30,0 Gewichtsteile metallisches Erdalkaliborat auf 100 Gewichtsteile Polymermaterial und mehr bevorzugt bis zu 20,0 Gewichtsteile metallisches Erdalkaliborat auf 100 Gewichtsteile Polymermaterial umfasst.

8. Kabel nach einem der vorstehenden Ansprüche, **dadurch gekennzeichnet, dass** das metallische Hydroxid aus Aluminiumtrihydroxid (ATH), Magnesiumdihydroxid (MDH) und einer beliebigen Mischung davon ausgewählt ist.

9. Kabel nach einem der vorstehenden Ansprüche, **dadurch gekennzeichnet, dass** die polymere Zusammensetzung bis zu 120 Gewichtsteile metallisches Hydroxid auf 100 Gewichtsteile Polymermaterial und mehr bevorzugt 40 bis 100 Gewichtsteile metallisches Hydroxid auf 100 Gewichtsteile Polymermaterial umfasst.

10. Kabel nach einem der vorstehenden Ansprüche, **dadurch gekennzeichnet, dass** die polymere Zusammensetzung im Wesentlichen frei von Zinkborat und einem beliebigen Derivat davon ist.

11. Kabel nach einem der vorstehenden Ansprüche, **dadurch gekennzeichnet, dass** die polymere Zusammensetzung ferner einen Weichmacher umfasst.

12. Kabel nach einem der vorstehenden Ansprüche, **dadurch gekennzeichnet, dass** die polymere Zusammensetzung ferner einen Stabilisator umfasst.

13. Kabel nach einem der vorstehenden Ansprüche, **dadurch gekennzeichnet, dass** die polymere Zusammensetzung ferner einen inerten Füllstoff umfasst.

14. Kabel nach einem der vorstehenden Ansprüche, **dadurch gekennzeichnet, dass** das flammhemmende Material aus einer Isolierschicht (2), einem Schutzmantel (3), einer Bettung (4) und einer Kombination davon ausgewählt ist.

15. Kabel nach einem der vorstehenden Ansprüche, **dadurch gekennzeichnet, dass** das flammhemmende Material die äußerste Schicht (3) des Kabels ist.

## Revendications

1. Câble comprenant au moins un élément conducteur allongé (1) entouré d'un matériau ignifugeant (2, 3, 4) obtenu à partir d'une composition polymère comprenant un matériau polymère comprenant du chlorure de polyvinyle (PVC), **caractérisé en ce que** la composition polymère comprend en outre :
- de 5,0 parties en poids de borate de métal alcalino-terreux par rapport à 100 parties en poids de matériau polymère, et
- plus de 30,0 parties en poids d'hydroxyde de métal par rapport à 100 parties en poids de matériau polymère.

2. Câble selon la revendication 1, **caractérisé en ce que** le matériau ignifugeant a une stabilité thermique d'au moins 40 minutes, selon la norme IEC 60811-405.

3. Câble selon la revendication 1 ou 2, **caractérisé en ce que** le matériau ignifugeant a un indice d'oxygène (% d'O₂) limité d'au moins 27 %, selon la norme EN ISO 4589-2.

4. Câble selon l'une quelconque des revendications précédentes, **caractérisé en ce que** le matériau ignifugeant a une résistance à la traction d'au moins 12,5 MPa, selon la norme IEC 60811-501.

5. Câble selon l'une quelconque des revendications précédentes, **caractérisé en ce que** le matériau ignifugeant a un allongement à la rupture d'au moins 220 %, selon la norme IEC 60811-501.

6. Câble selon l'une quelconque des revendications précédentes, **caractérisé en ce que** le borate de métal alcalino-terreux est le borate de calcium (Ca₃(BO₃)₂).

7. Câble selon l'une quelconque des revendications précédentes, **caractérisé en ce que** la composition polymère comprend jusqu'à 30,0 parties en poids de borate de métal alcalino-terreux par rapport à 100 parties en poids de matériau polymère, et plus préférablement jusqu'à 20,0 parties en poids de borate de métal alcalino-terreux par rapport à 100 parties en poids de matériau polymère.

8. Câble selon l'une quelconque des revendications précédentes, **caractérisé en ce que** l'hydroxyde de métal est choisi parmi le trihydroxyde d'aluminium (ATH), le dihydroxyde de magnésium (MDH), et tout mélange de ces composés.

9. Câble selon l'une quelconque des revendications précédentes, **caractérisé en ce que** la composition polymère comprend jusqu'à 120 parties en poids d'hydroxyde de métal par rapport à 100 parties en poids de matériau polymère, et plus préférablement de 40 à 100 parties en poids d'hydroxyde de métal par rapport à 100 parties en poids de matériau polymère.

10. Câble selon l'une quelconque des revendications précédentes, **caractérisé en ce que** la composition polymère est sensiblement exempte de borate de zinc ou de tout dérivé de ce composé.

11. Câble selon l'une quelconque des revendications précédentes, **caractérisé en ce que** la composition polymère comprend en outre un plastifiant.

12. Câble selon l'une quelconque des revendications précédentes, **caractérisé en ce que** la composition polymère comprend en outre un stabilisant.

13. Câble selon l'une quelconque des revendications précédentes, **caractérisé en ce que** la composition polymère comprend en outre une charge inerte.

14. Câble selon l'une quelconque des revendications précédentes, **caractérisé en ce que** le matériau ignifugeant est choisi parmi une couche isolante (2), une gaine de protection (3), un matelas (4), et une combinaison de ces matériaux.

15. Câble selon l'une quelconque des revendications précédentes, **caractérisé en ce que** le matériau ignifugeant est la couche externe (3) du câble.
